(19) **Europäisches Patentamt**

**European Patent Office**

**Office européen des brevets**

(11) **EP 1 346 948 A2**

(12) **EUROPEAN PATENT APPLICATION**

(43) Date of publication:
24.09.2003 Bulletin 2003/39

(51) Int Cl.7: **B81B 3/00**, B81B 7/02,
G02B 6/35, G02B 6/26,
G02B 26/08, H01G 5/16

(21) Application number: 03006171.7

(22) Date of filing: 19.03.2003

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(30) Priority: 19.03.2002 JP 2002075443

(71) Applicant: **JAPAN AVIATION
ELECTRONICS INDUSTRY, LIMITED**
**Shibuya-ku, Tokyo 150-0043 (JP)**

(72) Inventor: **Norimatsu, Toshihide,**
**Japan Electronics Indust.Ltd**
**Tokyo 150-0043 (JP)**

(74) Representative: **Hoffmann, Eckart, Dipl.-Ing. et al**
**Patentanwalt,**
**Bahnhofstrasse 103**
**82166 Gräfelfing (DE)**

(54) **Electrostatically operated optical switching or attenuating devices**

(57) In an electrostatically operated device manufactured by use of micromachining technology comprising: a stationary electrode substrate (8); a movable plate-like electrode (2) disposed substantially in parallel with said stationary electrode substrate; and means for supporting said movable plate-like electrode to be movable toward and away from the stationary electrode substrate, a drive voltage less than the pull-in voltage is applied between the stationary electrode substrate and the movable plate-like electrode thereby to electrostatically drive the movable plate-like electrode. In addition, the electrode-to-electrode distance between the movable plate-like electrode and the stationary electrode substrate when any drive voltage is not applied is set to a value greater than three times a distance that the movable plate-like electrode moves when it is electrostatically driven by application of a drive voltage less than the pull-in voltage.

FIG. 2

Printed by Jouve, 75001 PARIS (FR)

2

21    21    X

A>3X

STATIONARY
ELECTRODE    8

DRIVE VOLTAGE
V<PV

FIG. 8

**Description**

BACKGROUND OF THE INVENTION

1. Field of the Invention

The present invention relates to an electrostatically operated device that is manufactured by use of micromachining technology, and more particularly, to an electrostatically operated device configured such that when a movable plate-like electrode of the device is electrostatically driven toward a stationary or fixed electrode substrate of the device, the movable plate-like electrode is prevented from coming into contact with the stationary electrode substrate.

2. Description of the Related Art

An electrostatically operated device that is manufactured by use of micromachining technology can be embodied, for example, as an optical switch for changing the path of an optical signal propagating through an optical waveguide such as an optical fiber. For clarity of explanation, a case in which an electrostatically operated device is embodied as an optical switch will be described hereinafter.

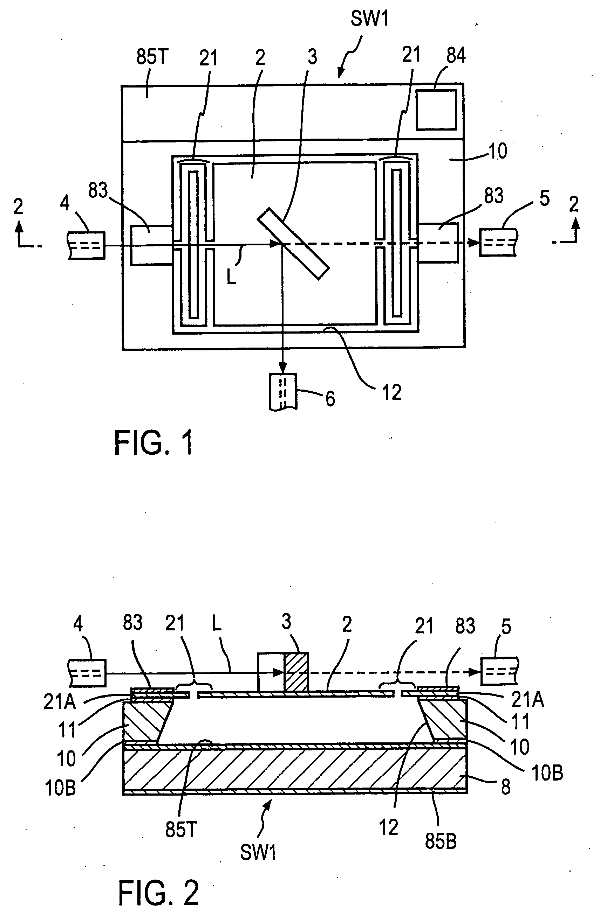

At first, an example of the prior art optical switch will be briefly described with reference to Figs. 1 and 2. Fig. 1 is a plan view illustrating a construction of the prior art optical switch, and Fig. 2 is a sectional view taken along the line 2-2 in Fig. 1 and looking in the direction indicated by the arrows. The illustrated switch SW1 comprises: a stationary or fixed electrode substrate 8 of a generally rectangle in plan; a movable electrode supporting frame 10 of a generally rectangle in plan, the major side thereof having substantially the same length as that of the stationary electrode substrate 8 and the minor side thereof being shorter than that of the stationary electrode substrate 8; a movable plate-like electrode 2 of a generally square in plan that is disposed substantially in parallel with the stationary electrode substrate 8 with a space or gap between them and above the central portion of an opening 12 of a generally rectangle in plan formed in the movable electrode supporting frame 10; two elastic and flexible beams 21 for supporting the movable plate-like electrode 2 to be movable toward and away from the stationary electrode substrate 8, that is, for supporting it for up and down or vertical motion, each beam having a plurality of meanders or sharply turning portions; and a mirror 3 formed on the central portion of the top surface of the movable plate-like electrode 2 in the direction of one diagonal line thereof.

Each of the elastic and flexible beams 21 is called "flexure" and one end thereof is fixed integrally to corresponding one of the two opposed sides of the movable plate-like electrode 2 generally on the center of the side, the two sides being opposed to each other in the longitudinal direction of the movable electrode supporting frame 10, and the other end thereof is formed into an anchor portion 21A of a generally square in plan which is, in turn, fixed to corresponding one of the two longitudinally opposed sides of the movable electrode supporting frame 10 generally on the center of the side. On the top surfaces of the anchor portions 21A are formed electrodes 83, respectively. Further, on the top surfaces of the centers of the two longitudinally opposed sides of the movable electrode supporting frame 10 on which the anchor portions 21A of the beams 21 are secured, are formed insulation layers (for example, $SiO_2$ layers) 11 as will be described later on, and hence the beams 21 are electrically insulated from the movable electrode supporting frame 10.

The movable electrode supporting frame 10, two beams 21 and movable plate-like electrode 2 are formed into one body, and they may be fabricated from, for example, an SOI (Silicon on Insulator) substrate of a generally rectangle in plan by use of micromachining technology. The manufacturing method thereof will be described later. Further, it is needless to say that the opening 12 of a generally rectangle formed in the movable electrode supporting frame 10 has such a size that it can accommodate the movable plate-like electrode 2 and two beams 21 therein.

The stationary electrode substrate 8 is a substrate made of, for example, single crystal silicon (Si) of a generally rectangle in plan and of a predetermined thickness, and in this example, on the overall top and bottom surfaces thereof are formed insulation layers (for example, $SiO_2$ layers) 85T and 85B, respectively. In order to form an electrode on the stationary electrode substrate 8, a portion (in the illustrated example, a top right corner portion in Fig. 1) of the top insulation layer 85T is removed to expose the inner silicon substrate, and an electrode 84 is formed on the exposed inner silicon substrate. This electrode 84 is usually used as a ground electrode.

The movable electrode supporting frame 10 is put on the stationary electrode substrate 8 constructed as described above, and they are formed into one body. As will be described later, on the bottom surface of the movable electrode supporting frame 10 is also formed an insulation layer (for example, $SiO_2$ layer) 10B, and hence the unified stationary electrode substrate 8 and movable electrode supporting frame 10 are electrically insulated from each other by the insulation layer 85T on the top surface of the stationary electrode substrate 8 and the insulation layer 10B on the bottom surface of the movable electrode supporting frame 10. Further, as shown in Fig. 1, the electrode 84 on the stationary electrode substrate 8 is to be formed such that it is located at the outside of the movable electrode supporting frame 10 put on the stationary electrode substrate 8.

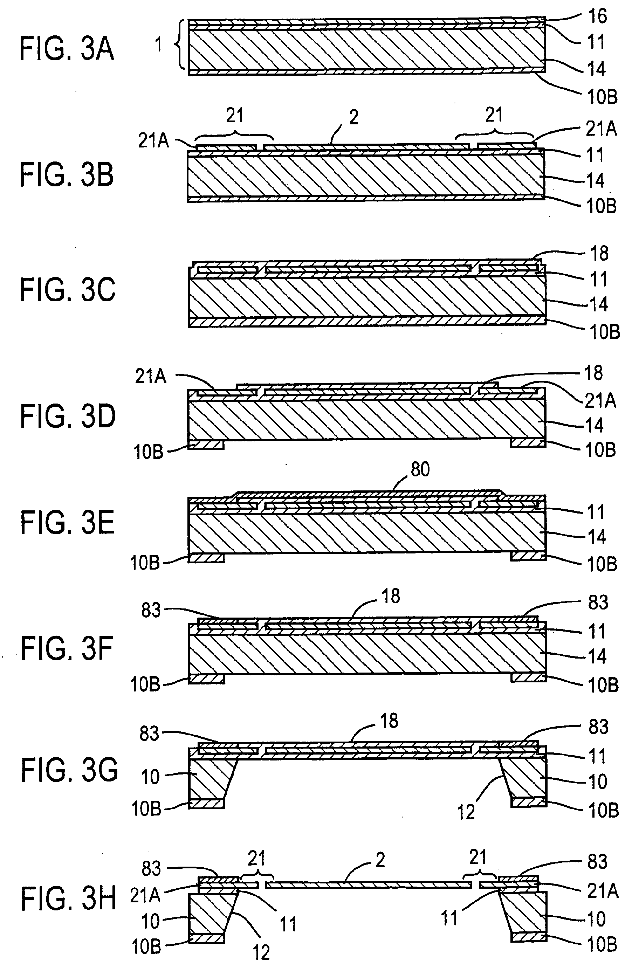

A method of fabricating the movable electrode supporting frame 10, and the two beams 21 and movable plate-like electrode 2 integrally formed with the movable electrode supporting frame 10 will be described with reference to Figs. 3A to 3H.

At first, as shown in Fig. 3A, an SOI substrate 1 of a generally rectangle in plan is prepared. In general, the SOI substrate 1 is constituted by a support substrate 14 of single crystal silicon, an insulation layer 11 on the top surface of the support substrate 14, and a thin layer 16 of single crystal silicon on the top surface of the insulation layer 11. In this example, there is used an SOI substrate 1 comprising a support substrate 14 of single crystal silicon, an insulation layer 11 of $SiO_2$ layer formed on the top surface of the support substrate 14, and a thin layer 16 of single crystal silicon joined onto the top surface of the $SiO_2$ layer 11. However, it goes without saying that any SOI substrate manufactured by use of one of known other methods or processes may be used. As stated above, in this example, the insulation layer (for example, $SiO_2$ layer) 10B is previously formed on the bottom surface of the SOI substrate 1 as shown in Fig. 3A.

Next, by use of photolithography technology, a patterning of the thin layer 16 of single crystal silicon of the SOI substrate 1 is done to leave portions thereof corresponding to shapes of the two beams 21 (including the anchor portions 21A) and the movable plate-like electrode 2 as shown in Fig. 3B.

Then, the overall surfaces of the SOI substrate 1 are oxidized. As a result, as shown in Fig. 3C, an $SiO_2$ layer 18 is formed on the beams 21 and the movable plate-like electrode 2 as well as on the exposed insulation layer 11, and also the thickness of the $SiO_2$ layer 10B on the bottom surface of the SOI substrate 1 is thicker.

Next, as shown in Fig. 3D, $SiO_2$ layers on the top surfaces of the anchor portions 21A of the beams 21 in the $SiO_2$ layer 18 on the top surface of the SOI substrate 1 are removed as well as an $SiO_2$ layer corresponding to the opening 12 of the movable electrode supporting frame 10 in the $SiO_2$ layer 10B on the bottom surface of the SOI substrate 1 is removed to expose the top surfaces of the anchor portions 21A and the bottom surface of the support substrate 14 except for the peripheral portion thereof.

Then, as shown in Fig. 3E, a double layer 80 of gold and chromium is formed on the overall top surface of the SOI substrate 1. Thereafter, as shown in Fig. 3F, the gold/chromium double layer 80 is removed except for portions thereof on the top surfaces of the anchor portions 21A of the beams 21 so that the electrodes 83 consisting of the gold/chromium double layer 80 are formed on the top surfaces of the anchor portions 21A, respectively.

Next, the support substrate 14 is etched from the bottom surface side of the SOI substrate 1 using KOH solution to form an opening 12 as shown in Fig. 3G. As a result, the movable electrode supporting frame 10 of a generally rectangle in plan is formed from the support substrate 14.

Thereafter, the $SiO_2$ layers 11 and 18 remaining on the top surface side of the SOI substrate 1 are removed except for portions of the $SiO_2$ layer 11 existing between the top surface of the movable electrode supporting frame 10 and the bottom surfaces of the anchor portions 21A of the beams 21, as shown in Fig. 3H. Thus, there are formed the movable electrode supporting frame 10 having the same construction and structure as those of the movable electrode supporting frame 10 shown in Figs. 1 and 2 together with the two beams 21 and movable plate-like electrode 2 integrally formed with the movable electrode supporting frame 10.

Further, a process of fabricating the mirror 3 to be formed on the top surface of the movable plate-like electrode 2 in the direction of one diagonal line thereof is omitted. However, in Japanese Patent Application No. 295037/1998 filed on October 16, 1998 by the same applicant as that of the present application or Japanese Patent Application No. 348378/2000 filed on November 15, 2000 by the same applicant as that of the present application, though the disclosed optical switches do not have an SOI substrate used therein, a process of fabricating a mirror is described. Therefore, a detailed explanation of the manufacturing process of a mirror will be referred to Japanese Patent Application Public Disclosure Nos. 121967/2000 and 148531/2002 that are public disclosures of these Japanese Patent Application Nos. 295037/1998 and 348378/2000. In addition, the prior optical switch shown in Figs. 1 and 2 is described as a prior art in Japanese Patent Application No. 227613/2001 filed on July 27, 2001 by the same applicant as that of the present application.

As described above, the stationary electrode substrate 8 is manufactured as a separate body, and the insulation layers (for example, $SiO_2$ layers) 85T and 85B are formed on the overall top and bottom surfaces of the stationary electrode substrate 8, respectively. The movable electrode supporting frame 10 constructed as described above is put on the insulation layer 85T formed on the top surface of the stationary electrode substrate 8, and then, they are united. Accordingly, the stationary electrode substrate 8 and the movable electrode supporting frame 10 are electrically insulated from each other by the insulation layers 85T and 10B.

Next, the operation of the optical switch SW1 constructed as discussed above will be described. As shown in Fig. 1, an input side optical waveguide, namely, an optical fiber 4 in this example, for inputting an optical signal L into the optical switch SW1 is located at the left side of the optical switch SW1 in the drawing. An output side optical waveguide, namely, an optical fiber 5 in this example, for transmitting the optical signal L supplied from the optical switch SW1 is aligned with the input side optical fiber 4 along a straight line passing through the mirror 3 at an angle of about 45° with the mirror surface of the mirror 3, and another output side optical waveguide, namely, an optical fiber 6 in this example, for transmitting the optical signal L supplied from the optical switch SW is disposed on a straight line that passes through the mirror 3 and that is orthogonal to the aforesaid straight line.

As described above, since the mirror 3 is placed on the central portion of the movable plate-like electrode 3 along a diagonal line thereof, the optical signal L that is outputted from the output end of the input side optical fiber 4 and goes right on in a space is incident on the mirror 3 at an angle of about 45° with the mirror surface of the mirror 3. As a result, the optical signal L is reflected by the mirror 3 in the direction of forming an angle of 90° (forming a right angle) with the incident light (the optical signal L is outputted from the mirror 3 at an angle of about 45° which is the same as the incident angle), and is transmitted to the input end of the output side optical fiber 6. In the specification, the transmission state of the optical signal L in which the optical signal L outputted from the input side optical fiber 4 is reflected by the mirror 3 and transmitted to the output side optical fiber 6 is defined as the steady state.

In the above steady state, in case of applying a predetermined voltage between the movable plate-like electrode 2 and the stationary electrode substrate 8 to generate an electrostatic force between the both electrodes in such manner that they are attracted each other, the two beams 21 are elastic and flexible and the stationary electrode substrate 8 is immovable, and hence the movable plate-like electrode 2 is driven downwardly toward the stationary electrode substrate 8. Accordingly, if a voltage applied between the movable plate-like electrode 2 and the stationary electrode substrate 8 is controlled to displace or drive the movable plate-like electrode 2 downwardly so that the mirror 3 fixed to the top surface of the movable plate-like electrode 2 is displaced or driven downwardly to a position where the mirror 3 is out of the optical path on which any optical signal outputted from the input side optical fiber 4 goes right on, the optical signal L outputted from the input side optical fiber 4 will go right on without being reflected by the mirror 3 and be transmitted to the output side optical fiber 5. Thus, the optical signal L incident on the optical switch SW1 can be switched to any one of the two output side optical fibers 5 or 6 for transmission to one desired output side optical fiber. In other words, the optical switch SW1 constructed as described above is capable of switching in space the path of an optical signal propagating through an optical waveguide or optical transmission line (path) without any intervention of a solid state optical waveguide.

The above-configured prior optical switch SW1 has the movable plate-like electrode 2 and the two beams 21 formed integrally with each other by use of the gold/chromium double layer 80 or other conductive thin film, and the thickness of the movable plate-like electrode 2 is much thin. For this reason, the thickness of the two beams 21 that mounts the movable plate-like electrode 2 on the movable electrode supporting frame 10 by their anchor portions 21A for supporting the movable plate-like electrode 2 for up and down motion, is also much thin, and the force of elastic restitution of the beams 21 is low. In addition, the bottom surface of the movable plate-like electrode 2 is smooth and the top surface of the stationary electrode substrate 8 opposite to the bottom surface of the movable plate-like electrode 2 is also smooth.

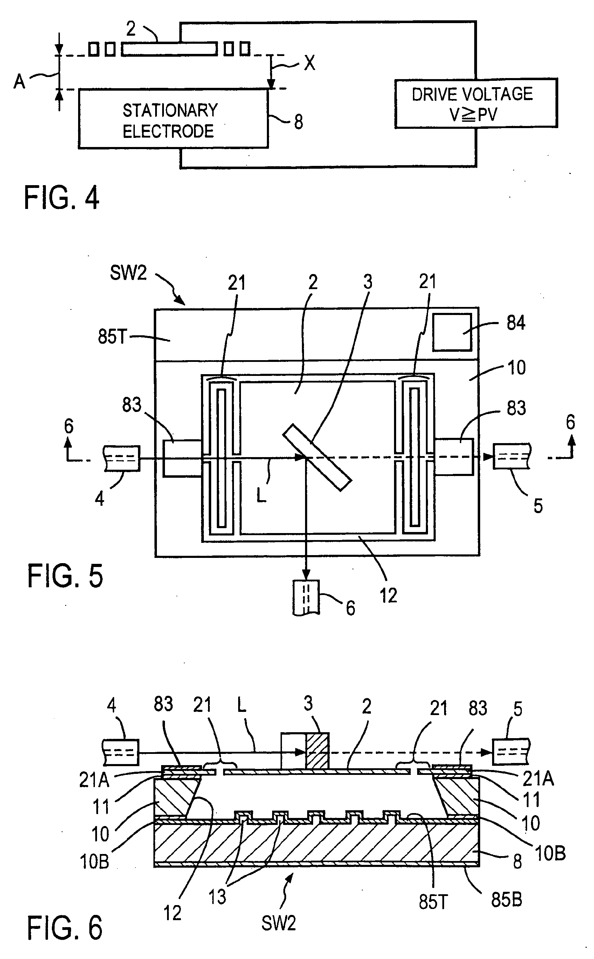

Moreover, in the prior art, as shown in Fig. 4, in case of driving the movable plate-like electrode 2 by a distance X downwardly (toward the stationary electrode substrate 8) for switching operation, a distance or gap A between the bottom surface of the movable plate-like electrode 2 and the top surface of the stationary electrode substrate 8 when any drive voltage is not applied therebetween, is set to a distance X that the movable plate-like electrode 2 is to be driven (the initial set value A=X), and between the movable plate-like electrode 2 and the stationary electrode substrate 8 is applied a predetermined drive voltage V that is capable of driving the movable plate-like electrode 2 by the distance X.

The relationship between the drive voltage to be applied to the movable plate-like electrode 2 and the distance that the movable plate-like electrode 2 is to be driven is not linear. It is characterized in that when the drive voltage applied to the movable plate-like electrode 2 is gradually increased, the movable plate-like electrode 2 is driven downwardly toward the stationary electrode substrate 8, and that when the driven distance of the movable plate-like electrode 2 becomes equal to or more than 1/3 of the distance A (in the prior art, A=X) between the movable plate-like electrode 2 and the stationary electrode substrate 8, that is, when a distance between the bottom surface of the movable plate-like electrode 2 already driven and the top surface of the stationary electrode substrate 8 opposite to the bottom surface of the electrode 2 is equal to or less than 2/3 of the initial set value X, the movable plate-like electrode 2 is driven at a dash toward the stationary electrode substrate 8 and is attracted or stuck to the top surface of the stationary electrode substrate 8. A drive voltage that drives the movable plate-like electrode 2 at a dash toward the stationary electrode substrate 8 is called "pull-in voltage".

In the prior art, since the movable plate-like electrode 2 is driven by the distance X, the predetermined drive voltage V is necessarily set to a voltage equal to or higher than the pull-in voltage PV. For this reason, when the movable plate-like electrode 2 moves over the distance equal to 1/3 of the initial set value X, it is driven at a dash toward the stationary electrode substrate 8 thereby to come into contact with the top surface of the substrate 8. Further, the pull-in voltage will be described later on in detail.

When the movable plate-like electrode 2 is displaced downwardly and the bottom surface thereof comes into contact with the top surface of the stationary electrode substrate 8, a phenomenon occurs that van der Waals' force acts or affects between the bottom surface of the movable plate-like electrode 2 and the top surface of the stationary electrode substrate 8 so that they are attracted to each other, and that the movable plate-like electrode 2 is not restored to its original position in an instant even the application of the drive voltage V is stopped. That is, there occurs a phenomenon that the movable plate-like electrode 2 and the stationary electrode substrate 8 are temporarily or permanently attracted to each other by van der Waals' force. Consequently, it is impossible to switch the path of an optical signal at once, and hence there is a disadvantage that the reliability of switching operation is greatly deteriorated.

In view of the foregoing, there is proposed an electrostatically operated device that is constructed such that protrusions are formed on either one of the bottom surface of the movable plate-like electrode 2 or the top surface of the stationary electrode substrate 8 to reduce the contact area between the movable plate-like electrode 2 and the stationary electrode substrate 8, and thereby to prevent occurrence of the phenomenon that the movable plate-like electrode 2 and the stationary electrode substrate 8 are temporarily or permanently attracted to each other by van der Waals' force. Such electrostatically operated device is disclosed in, for example, Japanese Patent Application Public Disclosure No. 256563/1998 and the above-mentioned Japanese Patent Application Public Disclosure No. 264650/2001, and in addition, it is shown in Fig. 15 of the above-mentioned Japanese Patent Application No. 227613/2001 as a prior art.

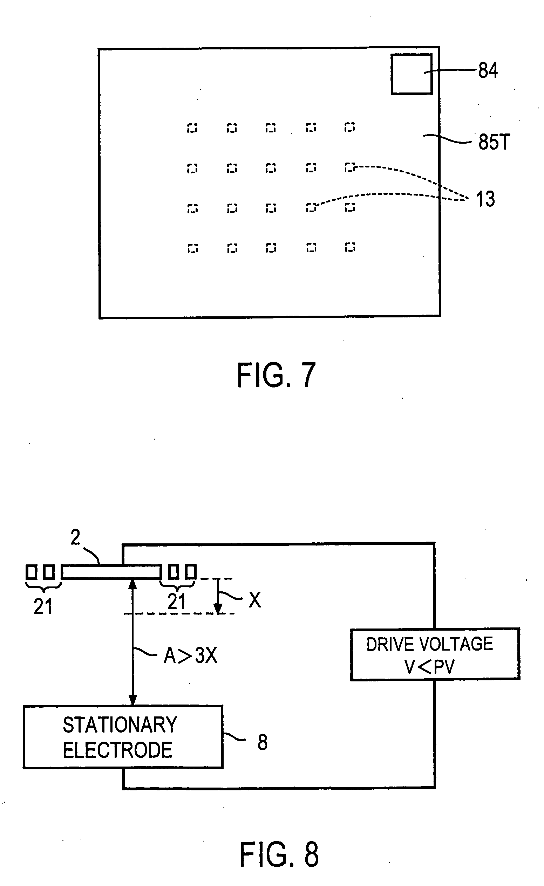

The prior electrostatically operated device described in the above-mentioned Japanese Patent Application No. 227613/2001 is shown in Figs. 5 to 7. The electrostatically operated device is also embodied as an optical switch, and Fig. 5 is a plan view showing a construction of the optical switch, Fig. 6 is a sectional view taken along the line 6-6 in Fig. 5 and looking in the direction indicated by the arrows, and Fig. 7 is a plan view of the stationary electrode substrate.

As is easily understood from Figs. 5 to 7, the optical switch SW2 has the same construction, shape and structure as those of the prior art optical switch SW1 already discussed with reference to Figs. 1 and 2 except that protrusions 13 are formed in a matrix on a portion of the top surface of the stationary electrode substrate 8, which is opposite to the movable plate-like electrode 2. Therefore, in Figs. 5 to 7, portions and elements corresponding to those shown in Figs. 1 and 2 are denoted by the same reference characters attached thereto and explanation thereof will be omitted. Further, the detailed explanation of a process of fabricating protrusions 13 on the top surface of the stationary electrode substrate will be referred to the above-mentioned Japanese Patent Application Public Disclosure No. 256563/1998 and Japanese Patent Application Public Disclosure No. 264650/2001, or the above-mentioned Japanese Patent Application No. 227613/2001.

As in this prior art, even if such structure or construction that the protrusions 13 are formed in a matrix on the top surface of the stationary electrode substrate 8 to decrease the contact area between the movable plate-like electrode 2 and the stationary electrode substrate 8 should be introduced, during that a drive voltage V equal to or higher than the pull-in voltage PV is being applied between the movable plate-like electrode 2 and the stationary electrode substrate 8, the insulation layer ($SiO_2$ layer) 85T on the top surface of the stationary electrode substrate 8 that intervenes between them becomes charged. This electrification causes an electrostatic attraction acting on the movable plate-like electrode 2. As a result, the movable plate-like electrode 2 is not returned to its original position in an instant even the application of the drive voltage V is stopped, and a time lag occurs in the return of the electrode 2. Accordingly, there exists still a disadvantage that the reliability of switching operation is greatly deteriorated.

In such case, if the insulation layer 85T would not be formed on the overall of the top surface of the stationary electrode substrate 8 and only the protrusions 13 coming into contact with the movable plate-like electrode 2 would be formed by use of an insulation, the amount of electrification will be reduced, and so it will be possible to decrease an electrostatic attraction acting on the movable plate-like electrode 2. However, it is impossible to completely eliminate the electrostatic attraction.

In addition, it is considered that in order to completely eliminate the electrostatic attraction due to the electrification of the insulation layer 85T, the insulation layer 85T is not formed on the top surface of the stationary electrode substrate 8. However, in this case, when the movable plate-like electrode 2 is driven toward the stationary electrode substrate 8 and comes into contact therewith, they become in conductive state, and hence it is undesirable in electric or electronic circuitry.

SUMMARY OF THE INVENTION

It is an object of the present invention to provide an electrostatically operated device constructed such that when a predetermined drive voltage is applied between a movable plate-like electrode and a stationary electrode substrate disposed substantially in parallel with each other and opposed to each other to electrostatically drive the movable plate-like electrode, the movable plate-like electrode is stopped at a position where it is not in contact with the stationary electrode substrate.

In order to accomplish the above object, in an aspect of the present invention, there is provided an electrostatically operated device manufactured by use of micromachining technology comprising: a stationary electrode substrate; a movable plate-like electrode disposed substantially in parallel with said stationary electrode substrate; and means for supporting said movable plate-like electrode to be movable toward and away from the stationary electrode substrate, and wherein a drive voltage less than the pull-in voltage is applied between the stationary electrode substrate and the movable plate-like electrode thereby to electrostatically drive the movable plate-like electrode.

In a preferred embodiment, the electrode-to-electrode distance between the movable plate-like electrode and the stationary electrode substrate when any drive voltage is not applied is set to a value greater than three times a distance that the movable plate-like electrode moves when it is electrostatically driven by application of a drive voltage less than the pull-in voltage.

With the construction as described above, since a drive voltage less than the pull-in voltage is applied between the movable plate-like electrode and the stationary electrode substrate of the device, the movable plate-like electrode remains stopped at a position where it has been displaced by a distance less than the pull-in displacement. Accordingly, it does not occur that the movable plate-like electrode is driven at a dash toward the stationary electrode substrate and comes into contact with the stationary electrode substrate, and also, a phenomenon that the insulation layer on the top surface of the stationary electrode substrate becomes charged, which causes an electrostatic attraction acting on the movable plate-like electrode, does not occur. As a result, when application of the drive voltage is stopped, the movable plate-like electrode is returned to its original position in an instant, and it is possible to instantly switch and drive the movable plate-like electrode from the initial or original position to a position to be displaced and from the displaced position to the initial position. Consequently, an electrostatically operated device that is stable in operation and has very high reliability can be obtained.

BRIEF DESCRIPTION OF THE DRAWINGS

Fig. 1 is a plan view showing the construction of an example of the prior art electrostatically operated device;

Fig. 2 is a sectional view taken along the line 2-2 in Fig. 1 and looking in the direction indicated by the arrows;

Figs. 3A to 3H are sectional views for explaining a method of manufacturing a movable electrode supporting frame, a movable plate-like electrode and two beams of the electrostatically operated device shown in Fig. 1 in a sequence of manufacturing processes;

Fig. 4 is a block diagram illustrating roughly the main components of the electrostatically operated device shown in Fig. 1;

Fig. 5 is a plan view showing the construction of another example of the prior art electrostatically operated device;

Fig. 6 is a sectional view taken along the line 6-6 in Fig. 5 and looking in the direction indicated by the arrows;

Fig. 7 is a plan view of the stationary electrode substrate used in the electrostatically operated device shown in Fig. 5;

Fig. 8 is a block diagram illustrating roughly the main components of an embodiment of the electrostatically operated device according to the present invention;

Fig. 9 is a diagrammatical view for explaining the principle of operation of a parallel plate type electrostatically operated actuator that is the principle of the present invention; and

Fig. 10 is a graph showing the relationship of the electrostatic attraction and the force of restitution to the displacement of the electrostatically operated actuator shown in Fig. 9.

DETAILED DESCRIPTION OF THE PREFERRED EMBODIMENTS

The preferred embodiment of the present invention will now be described in detail with reference to Fig. 8. The present invention may, however, be embodied in many different forms and should not be construed as limited to the embodiment set forth hereinafter; rather, the embodiment is provided so that this disclosure will be thorough and complete, and will fully convey the scope of the invention to those skilled in the art.

Fig. 8 is a block diagram illustrating roughly the main components of an embodiment of the electrostatically operated device according to the present invention, and in this embodiment, too, there is shown a case in which the electrostatically operated device is embodied as an optical switch. This optical switch may have the same construction, structure and shape as those of the prior art optical switch SW1 shown in Figs. 1 and 2, and though the detailed explanation thereof will be omitted, it comprises: a stationary electrode substrate 8 of a generally rectangle in plan; a movable electrode supporting frame (not shown) of a generally rectangle in plan that is put on the stationary electrode substrate 8; a movable plate-like electrode 2 of a generally square in plan that is disposed substantially in parallel with the stationary electrode substrate 8 with a space or gap between them and above the central portion of an opening of a generally rectangle formed in the movable electrode supporting frame; two elastic and flexible beams (each called "flexure") 21 for supporting the movable plate-like electrode 2 for moving toward and away from the stationary electrode substrate 8, each beam having a plurality of meanders or sharply turning portions; and a mirror (not shown) formed on the central portion of the top surface of the movable plate-like electrode 2 in the direction of one diagonal line thereof.

In this embodiment, in case of electrostatically driving the movable plate-like electrode 2 by a distance X downwardly (toward the stationary electrode substrate 8) for switching operation, a distance or gap A between the bottom surface of the movable plate-like electrode 2 and the top surface of the stationary electrode substrate 8 when any drive voltage is not applied therebetween, is set to a distance greater than three times a distance X that the movable plate-like electrode 2 is to be electrostatically driven (namely, A>3X). That is, the embodiment is characterized in that the initial set value of the electrode-to-electrode distance A is set to a value greater than 3X and the stationary electrode substrate 8 is disposed at a position that is apart by a distance greater than 3X from the bottom surface of the movable plate-like electrode 2 when any drive voltage is not applied thereto, and that a predetermined drive voltage V lower than the pull-in voltage PV is applied to the movable plate-like electrode 2.

With the construction as described above, the predetermined drive voltage V that is capable of driving the movable plate-like electrode 2 toward the stationary electrode substrate 8 by the distance X comes to a voltage lower than the pull-in voltage PV because the distance X that the movable plate-like electrode 2 is to be driven is shorter than 1/3 of the initial set value (greater than 3X) of the electrode-to-electrode distance A. As a result, by applying the predetermined drive voltage V lower than the pull-in voltage PV between the movable plate-like electrode 2 and the stationary electrode substrate 8, the movable plate-like electrode 2 moves toward the stationary electrode substrate 8 by the distance X so that a required switching operation can be carried out.

In this manner, since a drive voltage lower than the pull-in voltage PV is applied to the movable plate-like electrode 2, the electrode 2 remains stopped at the position where it has been driven. Accordingly, unlike the prior art discussed above, a phenomenon does not occur in which the movable plate-like electrode 2 is driven at a dash toward the stationary electrode substrate 8 thereby to come into contact with the top surface of the stationary electrode substrate 8, and hence there does not occur a phenomenon that the movable plate-like electrode 2 and the stationary electrode substrate 8 are temporarily or permanently attracted to each other by van der Waals' force. In addition, no phenomenon occurs that the insulation layer ($SiO_2$ layer) on the top surface of the stationary electrode substrate 8 becomes charged, and this electrification causes an electrostatic attraction acting on the movable plate-like electrode 2. Consequently, in the optical switch of the above embodiment the movable plate-like electrode 2 is immediately turned to its original position, and therefore, it is possible to switch the path of an optical signal always in an instant. Thus, the reliability of switching operation becomes greatly increased.

In the aforesaid embodiment, there has been described a case that the present invention is applied to an optical switch manufactured by use of micromachining technology. However, it is needless to say that the present invention can be also applied to various types of electrostatically operated devices such as VOA (Variable Optical Attenuator) manufactured by use of micromachining technology in addition to the optical switch, and the same function and effect can be obtained therefrom.

Next, the relationship between the electrostatic attraction and the force of restitution of a parallel plate type electrostatically operated actuator that is the principle of the present invention, and the pull-in voltage will be briefly described with reference to an article announced by Professor Hiroshi TOSHIYOSHI, Institute of Industrial Science, University of Tokyo.

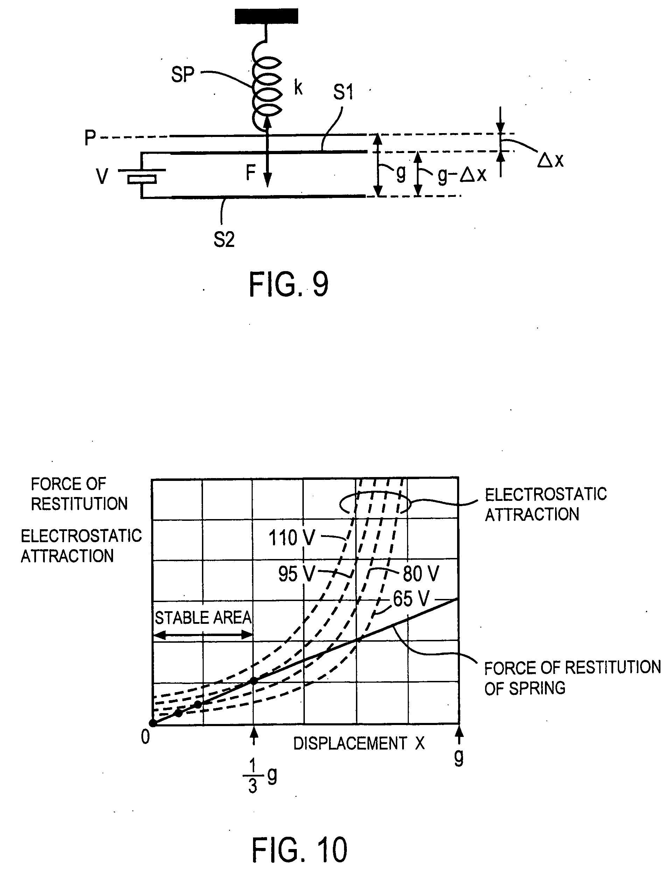

Fig. 9 is a diagrammatical view for explaining the principle of operation of a parallel plate type electrostatically operated actuator. It is assumed that in the initial state in which any drive voltage is not applied, a distance between a movable plate-like electrode S1 and a stationary plate-like electrode S2 opposed to each other is g, and that when a drive voltage V is applied between the movable plate-like electrode S1 and the stationary plate-like electrode S2, the movable plate-like electrode S1 is displaced by $\Delta x$ toward the stationary plate-like electrode S2 from the initial position P. At that time, a distance between the movable plate-like electrode S 1 and the stationary plate-like electrode S2 becomes g-$\Delta x$. Where, assuming that sprig constant of the spring SP is k, dielectric constant of a space between the two plate-like electrodes S1 and S2 is $\varepsilon_0$, area of each of the two plate-like electrodes S1 and S2 is S, and that force of restitution k$\Delta x$ of the spring SP equilibrates with electrostatic attraction F acting on the movable plate-like electrode S1, the following equation (1) is formed.

$$k\Delta x = \frac{1}{2} \cdot \frac{\varepsilon_0 S}{(g - \Delta x)^2} \cdot V^2 \qquad (1)$$

When separation of variables is made in the above equation (1), the following equation is formed.

$$\Delta x(g - \Delta x)^2 = \varepsilon_0 SV^2/2k$$

The left side term $\Delta x(g - \Delta x)^2$ of the above equation is differentiated and a displacement at which the gradient is to become zero is found.

$$\{\Delta x(g - \Delta x)^2\}' = (g - \Delta x)^2 + \Delta x \cdot 2(g - \Delta x) \cdot (-1)$$
$$= (\Delta x - g)(3\Delta x - g) = 0$$

Therefore, the pull-in displacement $\Delta x_{PULL\text{-}IN}$ of the movable plate-like electrode S1 and the pull-in voltage $V_{PULL\text{-}IN}$ at that time become as shown in the following equations (2) and (3).

$$\Delta x_{PULL\text{-}IN} = g/3 \tag{2}$$

$$V_{PULL\text{-}IN} = \sqrt{\frac{8kg^3}{27\varepsilon_0 S}} \tag{3}$$

As can be understood from the above equations (2) and (3), when the movable plate-like electrode S1 is displaced by a distance past 1/3 of g (g is the initial set value of the electrode-to-electrode distance), that is, the movable plate-like electrode S1 is displaced beyond the pull-in displacement $\Delta x_{PULL\text{-}IN}$ determined by the equation (2), what is called the pull-in phenomenon occurs in which the movable plate-like electrode S1 is driven at a dash toward the stationary plate-like electrode S2 thereby to be attracted to the top surface of the electrode S2. Looking at the same phenomenon from the drive voltage, when a drive voltage equal to or higher than the pull-in voltage $V_{PULL\text{-}IN}$ determined by the equation (3) is applied between the both plate-like electrodes, the movable plate-like electrode S1 is displaced past the pull-in displacement $\Delta x_{PULL\text{-}IN}$ and so the pull-in phenomenon occurs. As a result, the movable plate-like electrode S1 is driven at a dash toward the stationary plate-like electrode S2 and attracted to the top surface of the electrode S2. On the contrary, if a drive voltage applied to the movable plate-like electrode S1 is lower than the pull-in voltage $V_{PULL\text{-}IN}$, then the displacement of the movable plate-like electrode S1 does not reach the pull-in displacement $\Delta x_{PULL\text{-}IN}$, that is, is less than the pull-in displacement $\Delta x_{PULL\text{-}IN}$, and hence the pull-in phenomenon does not occur and the movable plate-like electrode S1 remains stopped at the position where it has been displaced.

Showing the relationship of the force of restitution and the electrostatic attraction corresponding to the left side term and the right side term of the above equation (1) respectively to the displacement of the movable plate-like electrode S1 as a graph, it is as shown in Fig. 10. In the example shown in Fig. 10, the pull-in voltage $V_{PULL\text{-}IN}$ is 95 V, and if a voltage greater than the pull-in voltage $V_{PULL\text{-}IN}$ is applied, the electrostatic attraction comes to stronger than the force of restitution of the spring, which results in that the movable plate-like electrode S 1 is driven at a dash toward the stationary plate-like electrode S2 and attracted to the top surface of the electrode S2. On the contrary, if a drive voltage lower than the pull-in voltage $V_{PULL\text{-}IN}$ is applied to the movable plate-like electrode S1, the balanced point between the electrostatic attraction and the force of restitution resides in a stable area between 0 and g/3 (a position at 1/3 of the initial set value g of the electrode-to-electrode distance) of the displacement, and the displaced distance of the movable plate-like electrode S1 is less than the pull-in displacement $\Delta x_{PULL\text{-}IN}$. Accordingly, it will be comprehended that unless a displacement more than the pull-in displacement $\Delta x_{PULL\text{-}IN}$ is given to the movable plate-like electrode S1, the pull-in phenomenon in which the movable plate-like electrode S1 is driven at a dash toward the stationary plate-like electrode S2 does not occur. Further, the details of the electrostatically operated actuator described above will be referred to the homepage of Professor Hiroshi TOSHIYOSHI, Institute of Industrial Science, University of Tokyo: http://toshi.fujita3.iis.u-tokyo.ac..jp/onlinelecture/electro static1.pdf.

The present invention is attained by aiming at the above-described principle and the electrostatically operated device constructed as described above has been materialized. Further, the spring SP shown in Fig. 9 corresponds to the two elastic and flexible beams (flexures) 21 having a plurality of meanders and for supporting the movable plate-like electrode 2 to be movable in the above-mentioned embodiment.

An example of design factors in the embodiment shown in Fig. 2 is shown as follows:

Area S of each of the electrodes 2 and 8: $S = 1.09 \times 10^{-7}$ $(m^2)$; the initial set value A of the electrode-to-electrode (the distance between the both electrodes when any voltage is not applied): $A = 1.80 \times 10^{-4}$ (m); spring constant k of the beams 21: $k = 5.04 \times 10^{-3}$ (N/m).

When an electrostatically operated device having the above factors has been manufactured, the pull-in voltage

$V_{PULL-IN}$ has become 94.6 (V). Therefore, a voltage of 90 (V) has been applied between the movable plate-like electrode 2 and the stationary electrode substrate 8 of this electrostatically operated device to drive the movable plate-like electrode 2, and the result has been obtained that the displacement of the movable plate-like electrode 2 has been less than $6 \times 10^{-5}$ (m) that is the pull-in displacement $\Delta x_{PULL-IN}$. Accordingly, an expected or intended displacement for the device could be obtained, and yet, there could be achieved high reliable and good operation in which the pull-in phenomenon that the movable plate-like electrode 2 is driven at a dash toward the stationary electrode substrate 8 and attracted to the top surface of the substrate 8 does not occur at all.

Further, it goes without saying that the shape and size of the movable plate-like electrode or stationary electrode substrate, and the number, shape and size of the beams, etc., are not limited to the illustrated example, and can be modified, altered or changed variously if the need arises.

As is clear from the foregoing, in accordance with the present invention, an electrostatically operated device manufactured by use of micromachining technology is arranged such that a drive voltage less than the pull-in voltage is applied between the movable plate-like electrode and the stationary electrode substrate of the device disposed substantially in parallel with each other and opposed to each other thereby to electrostatically drive the movable plate-like electrode, and hence the movable plate-like electrode remains stopped at a position where it has been displaced by a distance less than the pull-in displacement. Accordingly, it does not occur that the movable plate-like electrode is driven at a dash toward the stationary electrode substrate and comes into contact with the stationary electrode substrate, and also, a phenomenon that the insulation layer on the top surface of the stationary electrode substrate becomes charged, which causes an electrostatic attraction acting on the movable plate-like electrode, does not occur. As a result, when application of the drive voltage is stopped, the movable plate-like electrode is returned to its original position in an instant, and it is possible to instantly switch and drive the movable plate-like electrode from the initial or original position to a position to be displaced and from the displaced position to the initial position. Consequently, an electrostatically operated device that is stable in operation and has very high reliability can be obtained.

While the present invention has been described with regard to the preferred embodiment shown by way of example, it will be apparent to those skilled in the art that various modifications, alterations, changes, and/or minor improvements of the embodiment described above can be made without departing from the spirit and the scope of the present invention. Accordingly, it should be understood that the present invention is not limited to the illustrated embodiment, and is intended to encompass all such modifications, alterations, changes, and/or minor improvements falling within the scope of the invention defined by the appended claims.

## Claims

1.    An electrostatically operated device manufactured by use of micromachining technology comprising:

> a stationary electrode substrate;
> a movable plate-like electrode disposed substantially in parallel with said stationary electrode substrate; and
> means for supporting said movable plate-like electrode to be movable toward and away from the stationary electrode substrate,

> wherein a drive voltage less than the pull-in voltage is applied between the stationary electrode substrate and the movable plate-like electrode thereby to electrostatically drive the movable plate-like electrode.

2.    The electrostatically operated device as set forth in claim 1, wherein the electrode-to-electrode distance between the movable plate-like electrode and the stationary electrode substrate when any drive voltage is not applied is set to a value greater than three times a distance that the movable plate-like electrode moves when it is electrostatically driven by application of a drive voltage less than the pull-in voltage.

FIG. 1

FIG. 2

FIG. 3A

FIG. 3B

FIG. 3C

FIG. 3D

FIG. 3E

FIG. 3F

FIG. 3G

FIG. 3H

FIG. 4

2

A

X

STATIONARY
ELECTRODE

8

DRIVE VOLTAGE
V≧PV

FIG. 5

SW2

21   2   3   21

85T

84

10

83                83

6                                6

4                                5

L

12

6

FIG. 6

4   83   21   L   3   2   21   83   5

21A                                21A

11                                11

10                                10

10B                                10B

8

12   13                    85T   85B

SW2

FIG. 7

FIG. 8

FIG. 9

FIG. 10